# EUROPEAN PATENT SPECIFICATION

(11) **EP 4 469 492 B1**
(45) Date of publication and mention of the grant of the patent: **25.02.2026**
(21) Application number: 23702380.9
(22) Date of filing: 23.01.2023
(51) Int. Cl.: C08L 1/04, C08L 3/10, C08B 15/02, C08B 31/18

(54) **A PRODUCTION PROCESS FOR DIALDEHYDE CARBOHYDRATES**
VERFAHREN ZUR HERSTELLUNG VON DIALDEHYDKOHLENHYDRATEN
PROCÉDÉ DE PRODUCTION DE DIALDÉHYDE GLUCIDES

(30) Priority: 24.01.2022 NL 2030671
(43) Date of publication of application: 04.12.2024
(73) Proprietor: Rodenburg Productie B.v., Oosterhout 4903 RC (NL)
(72) Inventor: RODENBURG, Joost, 4903 RC Oosterhout (NL); RODENBURG, Thijs, 4903 RC Oosterhout (NL); DAVIDSE, Ronny, 4382 AD Vlissingen (NL); WILLEMS, Philippe Elisabeth M., 3071 Erps-Kwerps (BE); DE DIE, Simon, 4903 RC Oosterhout (NL); GRAßL, Tobias, 25582 Hohenaspe (DE); HEESCH, Linda, 25588 Mehlbek (DE); NEUBER, Rieke, 25469 Halstenbek (DE)
(74) Representative: Nederlandsch Octrooibureau
(86) International application number: PCT/NL2023/050027
(87) International publication number: WO 2023/140734

(56) References cited:
- WO-A1-95/12619
- NL-C2- 1 013 348
- US-A- 2 648 629
- US-A- 2 713 553
- US-A- 3 703 508
- PFEIFER V. F. ET AL: "Two Stage Process for Dialdehyde Starch Using Electrolytic Regeneration of Periodic Acid", INDUSTRIAL AND ENGINEERING CHEMISTRY, vol. 52, no. 3, 1 March 1960 (1960-03-01), US, pages 201 - 206, XP055956960, ISSN: 0019-7866, DOI: 10.1021/ie50603a020

## Description

### Field of the invention

The invention relates to the production for dialdehyde carbohydrates, particularly dialdehyde cellulose and starch.

### Background of the invention

Polysaccharides are typically made up of repeating units of C6 and C5 monosaccharides, modified or not. Most common monosaccharides are glucose, fructose, galactose, mannose, xylose, arabinose, etc. Most common polysaccharides are starch and cellulose, both homopolymers made from glucose units. Other common polysaccharides found in nature are hemicellulose (from C5 monomers), chitin (from N-acetylglucosamine), alginate, carrageenan, guar gum, etc.

Typically polysaccharides have a low reactivity with their environment and merely interact through physical processes, such as water bonding. This explains that they are used as thickener or water absorbers. On industrial scale, starches and cellulose can be modified to adapt their properties to specific requirements of the application. Most of these modifications do not alter the chemical reactivity of polysaccharides, but merely the physical interaction (e.g. viscosity, gel strength, pH stability of gels, etc.). Examples of such modified polysaccharides are hydrolysed starches, esterified starches, carboxymethyl cellulose, etc.

However, in the art there also exists a different way of modifying carbohydrates and particularly polysaccharides such as above, by introducing reactive aldehyde groups in the polymer structure. In doing so, carbohydrates become chemically reactive and can form chemical bonds with amines or hydroxyl groups. Practically, that means that a dialdehyde-carbohydrate can react with proteins and other polysaccharides. Dependent on the carbohydrate of choice, such a chemical modification if possible on industrial scale opens commercial perspectives, such as crosslinking cellulose to obtain water resistant paper, crosslinking leather proteins (= tanning process) to prevent decay, stabilisation of enzymes and reaction with the membrane of micro-organisms with bacteriostatic properties as a result. This list is however a non-limiting list of applications.

Making a dialdehyde is not a 'common' carbohydrate modification, where polysaccharide oxidation is. Production of the dialdehyde carbohydrate is based on a particular chemical 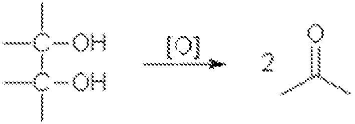 mechanism named 'oxidative cleavage of vicinal diols':
A proper oxidant should be used, able to cleave selectively the C2-C3 C-C bond and oxidise it to aldehydes (and not further to carboxylic groups). While lead tetraacetate may be used, it unattractively introduces lead into the system. Nowadays, the most suitable oxidants are periodate or biacetyl iodobenzene, but these reagents are expensive and are consumed (reduced) in the oxidation process of carbohydrates. In the art there are many attempts to regenerate these lodine-based oxidants, from varying angles such as oxidation of iodate with e.g. sodium hypochlorite, with ozone or with chlorine gas. However, each of these known regeneration method comes with disadvantages; the common denominator is salt production and chemical consumption. From resource management perspective, there is the need for reducing the use of chemicals and the formation of salt. In addition, often these processes also degrade the carbohydrate or introduce contaminants to the end product.

Instead of re-oxidation of the oxidant by addition of chemicals, using electrochemical oxidation of iodate is another route described in literature. The main advantage is that electron transfers needed in redox reactions are coming straight from electricity rather than from other chemicals. Such a process for the production of dialdehyde carbohydrates and more in particular dialdehyde starch (DAS) goes back to US2,648,629. It describes a process to oxidise starch with a catalytic amount of periodate and regenerate spent periodate. The anode is a PbO₂ electrode and the anolyte contains both carbohydrate and periodic acid; the carbohydrate is oxidised and in the same compartment, iodic acid is oxidised to periodic acid. This is continued until the carbohydrate is completely oxidised. The catholyte consists of sulphuric acid and the cathode is made of lead as well. Unfortunately this process involves intensive use of lead electrode that is easily corroded, releasing Pb particles in the medium. Also, organic deposits form on the electrode thus compromising the overall efficiency.

NL1013348C describes a method for the regeneration of periodate, specifically starting from an alkaline Li-iodate solution (pH 12) and using a Boron Doped Diamond (BDD) electrode as most effective solution. Such a BDD electrode is completely inert and does hardly corrode. With the addition of lithium fluoride to the anolyte, O₂ formation is reduced, and the periodate yield is increased. Unfortunately, while Li-periodate has its advantages, Li-iodate is relatively expensive, Lithium fluoride is an extra source of contaminant and can compete with iodate (associated with a risk of more electricity consumption) and it introduces fluorated compounds introduced in the system.

Hence, there is a need for producing dialdehyde carbohydrates, particularly carbohydrates such as starch and cellulose, while regenerating periodate quantitatively and qualitatively in a cost-effective way, without generation of by-products or contaminants that may interfere in the process or the dialdehyde carbohydrate quality. Associated therewith, there is also a need for developing a process for producing dialdehyde carbohydrates that uses as many side-reaction products of the carbohydrate oxidation and oxidant regeneration steps as possible, thus further reducing the demand for external chemicals.

### Summary of the invention

It is the aim of this invention to provide a (continuous or semi-continuous) method for oxidizing a carbohydrate i.e. producing of a dialdehyde carbohydrate, preferably a dialdehyde cellulose or dialdehyde starch, using periodic acid, and regenerating the periodic acid used in the carbohydrate oxidation, the method involving first oxidizing a carbohydrate using periodic acid, to obtain the corresponding dialdehyde carbohydrate and iodic acid, wherein the iodic acid thus generated is subsequently electrolytically regenerated into periodate under alkaline conditions (preferably to pH 8 - 13), and wherein the periodate salt is then electrolytically acidified to periodic acid which is returned to the carbohydrate oxidation. The net sum of the method of oxidizing the carbohydrate and regeneration of the periodic acid oxidizer is: R-CHOH-CHOH-R -> 2R-CHO + H₂. The periodic acid may be ortho- or metaperiodic acid, or a combination thereof.

The regeneration of periodate from iodate involves the use of alkali, for example using amines and/or hydroxides suitable for achieving a pH 8 - 13, preferably hydroxides. The use of amines to transfer iodate into periodate is less preferred, since amines will typically be oxidized during electrolysis, and for example ammonia may lead to health and environmental safety issues.

In a preferred embodiment, using hydroxide for achieving alkaline conditions, taking periodic acid in the form of orthoperiodic acid as an example, the different steps can be characterized as follows:
a. Carbohydrate oxidation: H₅IO₆ + R-CHOH-CHOH-R -> HIO₃ + 2R-CHO + 3H₂O
b. lodic acid neutralisation: HIO₃ + OH⁻ -> IO₃⁻ + H₂O
c. Periodate salt regeneration: IO₃⁻ + H₂O + 2OH⁻ -> H₂IO₆³⁻ + H₂
d. Periodate salt acidification: H₂IO₆³⁻ + 3H₂O -> H₅IO₆ + 3OH⁻

The process may likewise be performed using metaperiodic acid and/or with a combination of meta- and orthoperiodic acid (5HIO₄ + R-CHOH-CHOH-R -> 5HIO₃ + 2R-CHO + H₂O). The process may be initiated with a periodic salts thereof, since periodic acid is generated in the electrolytic cell D.

In a preferred embodiment, the hydroxide is provided in the form of LiOH, NaOH and/or KOH, preferably NaOH. The use of NaOH in (step b) of) the regeneration increases the solubility of both the educt and the product, and particularly increasing the dissolved concentration of the educt improves current efficiency.

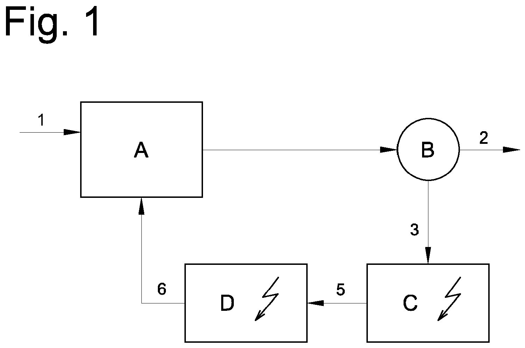

A schematic representation of the process or method is given in Figure 1, showing the closed loop format; 1. Carbohydrate feed; 2. dialdehyde carbohydrate; 3. lodic acid; 5. Periodate salt; 6. Periodic acid; A. carbohydrate oxidation; B dialdehyde carbohydrate recovery; C. electrolytic cell; and D. electrolytic cell. Not shown in the diagram are the initial inward stream of alkali salt (preferably hydroxy) to electrolytic cell C, and the initial inward stream of periodic acid or periodic salt to carbohydrate oxidation reactor A, both needed to start up the process.

### List of preferred embodiments

1. A method for oxidizing a carbohydrate into a dialdehyde carbohydrate using periodic acid, and regenerating the periodic acid used in the carbohydrate oxidation, involving first oxidizing a carbohydrate using periodic acid, to obtain the corresponding dialdehyde carbohydrate and iodic acid, wherein the iodic acid thus generated is subjected to a two-step electrolytic process, wherein the iodic acid is first electrolytically regenerated into periodate under alkaline conditions, and the periodate thus formed is then electrolytically acidified to periodic acid, which periodic acid is returned to the carbohydrate oxidation.
2. The method according to embodiment 1, wherein the carbohydrate is cellulose or starch.
3. The method according to embodiment 1 or 2, wherein the iodic acid is first electrolytically regenerated into periodate using hydroxide, preferably sodium hydroxide.
4. The method according to any of the preceding embodiments, characterized being a closed loop method meaning that after start-up addition of the periodic acid and base, the method can be carried out continuously with an inward transfer of carbohydrate to the carbohydrate oxidation and electricity for the electrolytic cells in the regeneration cycle, and that periodic acid and preferably also the base is used essentially catalytically, and without the structural need for additions of chemicals such as base and periodic acid after initiation of the first oxidation step.
5. The method according to any one of the preceding embodiments, wherein the periodate regeneration from iodate and/or the periodate acidification are carried out in an electrolytic cell with a boron-doped diamond anode.
6. The method according to any one of the preceding embodiments, wherein at least a part of any H₂ generated in the periodate regeneration steps is transformed in a fuel cell to produce electricity which may be used in the electrolytic regeneration steps.
7. An installation for carrying out the method according to any one of the preceding embodiments, comprising a reactor unit A comprising an inlet for the carbohydrate feed 1 and an outlet for the dialdehyde carbohydrate-comprising stream, wherein the reactor unit A is conditioned for carbohydrate oxidation to form dialdehyde carbohydrate, wherein the dialdehyde carbohydrate-comprising stream is subjected to means B for separating iodic acid from the dialdehyde carbohydrate-comprising stream 2 and the iodic acid-enriched stream 3 is forwarded to the anode side of an electrolytic cell C with a BDD anode, wherein the pH of the anolyte of the electrolytic cell C is controlled to alkaline conditions, wherein the electrolytic cell C is conditioned to carry out the periodate regeneration from iodate, wherein the electrolytical cell C is provided with means for separating periodate that precipitates in the anolyte, and the separated periodate-stream 5 is forwarded to a second electrolytic cell D with a BDD anode, wherein the electrolytic cell D is conditioned to carry out the periodate acidification, and wherein periodic acid 6 thus formed is returned to reactor unit A.
8. The installation according to embodiment 7, wherein any residual organics introduced with the iodate fed to the periodate oxidation cell are oxidized at the BDD anode(s) in the periodate regeneration cycle.

### Detailed description of the invention

The invention pertains to a method for oxidizing a carbohydrate i.e. producing of a dialdehyde carbohydrate, preferably a dialdehyde cellulose or dialdehyde starch, using periodic acid, and regenerating the periodic acid used in the carbohydrate oxidation, the method involving first oxidizing a carbohydrate using periodic acid, to obtain the corresponding dialdehyde carbohydrate and iodic acid, wherein the dialdehyde carbohydrate is recovered and further processed for application, and wherein the iodic acid thus generated is separated from the dialdehyde carbohydrate and subsequently electrolytically regenerated into periodate under alkaline conditions (preferably to pH 8 - 13), and wherein the periodate is then electrolytically acidified to periodic acid which is returned to the carbohydrate oxidation.

The method thus advantageously combines oxidizing a carbohydrate i.e. producing of a dialdehyde carbohydrate, and regenerating the periodic acid used in the carbohydrate oxidation, to reuse in the carbohydrate oxidation again. The method of the invention is an integrated carbohydrate oxidation and periodate regeneration concept, using (catalytic) amounts of periodate to oxidise carbohydrates to a high degree of substitution in a relatively short reaction time. In the context of the invention, the term 'catalytic' implies that the periodic acid that is in fact used in the carbohydrate oxidation step is essentially recovered in the combined method, the method requiring only the transfer of an electric current and a carbohydrate into the production of a dialdehyde carbohydrate and H₂, without the need for inward or outward transfer of chemicals or salt byproducts. The chemicals and salt produced in the process are all consumed. The carbohydrate oxidation takes place at low pH, and the oxidation is carried out by using periodic acid (H₅IO₆, or HIO₄), instead of with conventional (meta)periodate salts. The regeneration of periodate salt involves two electrolytic steps. The spent periodic acid (i.e. iodic acid or HIO₃) is separated from the dialdehyde carbohydrate, preferably in a quantitative way (meaning that essentially no iodate compounds are left in the dialdehyde carbohydrate) and regenerated in a regeneration unit which involves two electrolytic cells: an oxidation cell and an acidification cell.

The electrolytic acidification step is regarded key to the success to run the method continuously and economically. This extra step outweighs the loss of current efficiency if the periodate would not be regenerated under alkaline conditions.

Advantageously, by way of the method of the invention expensive Iodine-compounds are used as catalysts, as they are continuously regenerated. Also alkali additions, preferably NaOH or KOH, LiOH), and water usage are balanced, meaning that all metabolites are optimally used in the process (no consumption of chemicals and/or salt production).

The periodate regeneration is carried out using an electrolytic cell with a BDD (Boron Doped Diamond) anode. For the cathode, the skilled person will have no difficulty finding a suitable electrode material, such as a stainless steel cathode, platinum or even a BDD electrode. By applying an electric current through the system, the iodate is continuously transformed to periodate at the anode. The use of inert BDD electrodes minimizes release of elements in the product and corrosion. Using BDD avoids corrosive material bleed-out, and has the advantages of high durability, mechanical stability and catalytic inertness. Any organic residues that are entered with the carbohydrate or may be formed in the carbohydrate oxidation step and end up in the electrolytic cell and which otherwise may give rise to corrosion issues when using nondurable lead anodes, are herewith tackled; advantageously, these BDD electrodes have the capacity to oxidise organic residues such as formic acid into CO₂. Advantageously, the BDD electrode can reduce accumulation of organic contaminants coming from the carbohydrate oxidation step, thus minimizing any efficiency loss. The advantages of a BDD anode in periodate regeneration are addressed by Arndt et al. "The Green Electrochemical Synthesis of Periodate" Angew. Chem. Ed. 2020, 59, 8036-8041. As reported therein, periodate can be readily produced with high purity. With reference to Arndt *et al,* amongst others, it is noted that the method according to the invention preferably excludes any acidic recrystallization into metaperiodate (IO₄⁻) such as typically applied there, using e.g. nitric acid. This is less preferred since it would introduce extra steps and may increase the need for structural use of chemicals and/or salt production, while the method of the invention can advantageously address these issues.

For high efficiency reasons, the anolyte used in electrolytically regenerating periodate from iodic acid operates under alkaline conditions, preferably a pH in the range of 8 to 13. The catholyte preferably comprises any alkali or base suitable to work in the aforementioned pH range, there is a preference for hydroxide such as sodium hydroxide (NaOH). Excess production of OH⁻ from the catholyte can be used to increase the pH of the acidic iodic acid solution to the alkaline region, suitable as anolyte. When entering the anode side, the residual organic matter (carbohydrate residues and soluble degradation products such as formic acid particularly in case of the carbohydrate being starch) are oxidised to CO₂ at the BDD electrode and the iodate salt is converted to periodate salt that precipitates and can be separated from the anolyte.

Importantly, as a second step of the regeneration cycle, the precipitated periodate salt is then acidified in a second electrolytic cell with preferably a BDD anode. Again, by applying an electric current through the system, the periodate salt is acidified into periodic acid, and the resulting periodic acid is returned to the carbohydrate oxidation stage. Since the sum of the first and second step yields periodic acid in amounts which correspond to those used for the carbohydrate oxidation, the periodic acid in the method of the invention may be characterized as a catalyst.

The invention also pertains to an installation for carrying out the method of the invention, comprising a reactor unit A comprising an inlet for the carbohydrate feed 1 and an outlet for the dialdehyde carbohydrate-comprising stream, wherein the reactor unit A is conditioned for carbohydrate oxidation to form dialdehyde carbohydrate, wherein the dialdehyde carbohydrate-comprising stream is subjected to means B for separating iodic acid from the dialdehyde carbohydrate-comprising stream 2 and the iodic acid-enriched stream 3 is forwarded to the anode side of an electrolytic cell C with a BDD anode, wherein the pH of the anolyte of the electrolytic cell C is controlled to alkaline conditions (preferably to pH 8 - 13), wherein the electrolytic cell C is conditioned to carry out the periodate regeneration from iodate, wherein the electrolytical cell C is provided with means for separating periodate that precipitates in the anolyte, and the separated periodate-stream 5 is forwarded to a second electrolytic cell D with a BDD anode, wherein the electrolytic cell D is conditioned to carry out the periodate acidification, and wherein periodic acid 6 thus formed is returned to reactor unit A. In the electrolytic cells, the skilled person will have no difficulty finding a suitable cathode; non-limiting examples are platinum, BDD and stainless steel. The dialdehyde carbohydrate-comprising stream that is leaving the reactor unit A may be forwarded to one or more conventional means for collecting or recovering the dialdehyde carbohydrate, for example involving membrane filtration, spray- or drum-drying and/or centrifugation. This list is non-limiting and recovery of dialdehyde carbohydrate is not regarded to restrict the invention in any way. The pH in the anolyte of the electrolytic cell C is preferably controlled using alkali salt (preferably hydroxide such as NaOH). In a preferred embodiment, in operation at least a part of the alkali salt (preferably hydroxide, more preferably NaOH) generated at the cathode side of the electrolytic cell C may be separated from the catholyte and used as the base source for the anolyte of the electrolytic cell C. When starting up the process, alkali salt (preferably hydroxide such as NaOH) 4 is added to the anolyte and/or to the iodic acid-enriched stream 3 prior to entering the electrolytic cell C.

In a preferred embodiment, the electrolytic cell C may be provided with means for collecting H₂ from the catholyte which may be transferred to a fuel E.

The invention relates to a method for the oxidation of carbohydrates which possess two adjacent secondary alcohol functional groups, wherein an equivalent or a less than equivalent amount of periodic acid is used and the periodic acid is regenerated during the reaction. The oxidation of carbohydrates of this type leads to dialdehyde carbohydrates. The reactive aldehyde groups render dialdehyde compounds of this type suitable for many applications, for example as cross-linking agents for naturally occurring and synthetic polymers, mainly with the aim of a reduction of the sensitivity to moisture and the production of insoluble films and fibres. Thus, dialdehyde starch is used in the paper, leather and textile industry. It is also usable as an additive in glue, binding agents, coatings, photographic material, thickeners, cosmetics, plastics and the like.

Suitable carbohydrates (R-CHOH-CHOH-R) that can be oxidised to dialdehyde carbohydrates (RCHO) using the method according to the invention are, in principle, all disaccharides, oligosaccharides and polysaccharides which possess a glycol functional group, that is to say a vicinal dihydroxyl group, at least in one monosaccharide unit, but preferably in the majority of the monosaccharide units. Examples are glucans such as starch, cellulose, glycogen and dextran, fructans such as inulin and levan, cell wall polysaccharides such as mannans, galactans, xylans and arabans, other pentosans, chitins as naturally occurring in crustaceae, fungi and green algae, pectic acid and pectins, and other gums and the like. Also useful are naturally occurring and synthetic analogues, fractions and derivatives thereof, including starch fraction such as amylose and amylopectin, dextrins, cyclodextrin, but also sucrose, lactose and maltose. Suitable carbohydrates also include oxidised carbohydrates, for example carbohydrates in which some of the primary hydroxyl groups have been replaced, for example by carboxylic acid groups or by ammonium groups, either as natural products or as products from (bio)chemical oxidation of carbohydrates. The carbohydrate is preferably starch or cellulose. With the method of the invention, a carbohydrate with any desirable content of dialdehyde functional groups per monosaccharide unit can be obtained.

The carbohydrate oxidation is preferably carried out in liquid form, including solution or suspension form, although the carbohydrate oxidation is also feasibly carried out in a semi-dry state, or by using organic solvents such as ethanol. Such treatments are well-known to the skilled person, particularly in the context of starch where such conditions are typically employed to control swelling. The invention is not particularly limited to the state of the carbohydrate during oxidation. The dialdehyde carbohydrate product is recovered at the end of the oxidation, and subjected to further processing using conventional washing, filtering and concentrating or drying. The iodate-rich stream can be further concentrated by conventional means and is forwarded to the regeneration part of the loop.

The method is preferably characterized being a closed loop production method meaning that after start-up addition of the periodic acid and base, the method can be carried out continuously with an inward transfer of carbohydrate and electricity for the electrolytic cells, and that periodic acid and preferably also the base (more preferably hydroxide) is used essentially catalytically, and without the structural need for additions of chemicals such as base and periodic acid after initiation of the first oxidation step. The terms 'essentially catalytically' and 'structural need' reflect that the method allows for minute base or periodic acid additions to correct for any leaching. Over time, small amounts of iodine may be washed out with the carbohydrate recovery. It is preferred that the relative amount of periodic acid that is recycled is at least 98% of the original amount of periodic acid, preferably per regeneration cycle; and/or the relative amount of base that that is recycled is at least 98 % of the original amount of base, preferably per regeneration cycle. In other words, the method preferably uses a carbohydrate and electricity as incoming consumables, and produces dialdehyde carbohydrate as sole non-gaseous end product. It is preferred to refrain from any auxiliary chemistry. The first step of the method. i.e. a) carbohydrate oxidation, is carried out with periodic acid according to traditional method. In the context of the invention, the term 'periodic acid' refers to the highest oxidation number of iodine, particularly orthoperiodic acid with the chemical formula H₅IO₆.

Once the periodic acid is reduced to iodic acid, this stream is isolated and regenerated in a two-step electrolytic process. Firstly, the isolated iodic acid-rich stream is neutralized and forwarded to a first regeneration unit which involves an electrolytic cell, where neutralized iodic acid (iodate salt) is regenerated into periodate salt. The neutralisation can be carried out before or in the regeneration unit.

The periodate salt thus formed can be acidified in the same or in a separate electrolytic cell. For both electrolysis steps, the anode is a BDD electrode, and the cathode is an inert material of choice, such as stainless steel.

The method of carbohydrate oxidation and regeneration cycle of the invention typically takes 1 - 48 hours, preferably 2 - 24 hours. In one embodiment, the carbohydrate oxidation rate is characterized by use of 5-100, preferably 10 - 50 g/h periodic acid (HIO₄ and/or H₅IO₆). While the periodic acid recovery/regeneration rate per electrolytic cycle is desirably high, with the 'closed loop' design of carbohydrate oxidation and two-step periodic acid regeneration the periodic acid may be regenerated in one or multiple electrolytic cycles.

It is preferred that no co-products are produced with the method of the invention, except for H₂ and optionally O₂ which advantageously can be used to generate electricity again. The present method advantageously avoids the consumption of (toxic) chemicals, unnecessary salt production and salt accumulation including the formation of sulphates, nitrates and fluoride, beneficially avoids corrosion and heavy metal contamination, and the need for clearing out any residual organics from the iodic acid stream. While organic residue formation is very limited, any such residual organics introduced in the electrolytic oxidation cell is oxidized at the BDD anode(s) in the first and/or second electrolytic cells in the periodate regeneration cycle, thus rendering it possible to purify the iodic acid stream from such organic residues from the cycle.

H₂ formed at the cathode while regenerating periodate salt from iodate salt and from acidifying the periodate salt can be recovered and transformed in a fuel cell to electricity that again can be used in the electrolytic regeneration process. Also, it is preferred that the preferred hydroxide from the catholyte used to neutralise iodic acid (b) is purified. Indeed, some reducing compounds may be formed at the cathode and - when introduced in the anode compartment- would disturb the oxidation of iodate to periodate. This will immediately be seen by the formation of brownish iodine and iodide compounds. Therefore, the hydroxide from the catholyte is preferably led through an ORP elevator. Here O₂ (generated at the anode by electrolysis of water) is flushed through the hydroxide solution, oxidising all reducing compounds. This embodiment allows for a further optimal closing of the loop.

### Example

We started with a specific volume of periodic acid solution in water that was coming back from the electrochemical regeneration tank and was put into a reactor; this solution contained 0.5 mol periodic acid. To this solution, which was at ambient temperature, we added 1.0 mol (calculated based on the Mw of the anhydro glucose unit; AGU) of native potato starch and mixed at ~ 500 rpm to get a homogeneous suspension quickly. The starch concentration in this suspension was 7.5% by weight.

Then we let the suspension react at room temperature (~ 20 °C) for typically about 12 hours, at this point under gentle mixing to prevent settling of the starch, and shielded from light. The pH was maintained as is.

After this reaction, when (most of) the oxidation power was used, the starch suspension was washed with water to separate the iodine-containing components from the then oxidized dialdehyde starch. The separated and washed starch was further processed with known and conventional process steps removing the excess of water to obtain a dried off-white powder of dialdehyde starch typically at its equilibrium moisture content.

The solution with the iodine-containing components (mostly iodic acid, but some periodic acid, iodate, etc. too) was sent to the electrochemical regeneration module. Where needed, for instance when a higher concentration feed was required, the solution coming from the wash step was concentrated by evaporation, with membrane filtration or other conventional technologies. The electrochemical unit involved various succeeding steps which resulted, over and over again, in a periodic acid solution which in turn was used as the starting solution in the starch oxidation process as described above.

The electrochemical regeneration was carried out in a divided electrochemical cell. The cell was implemented in a filter press style and contained a BDD electrode as anode and a stainless-steel electrode as cathode. The separation between the anolyte and the catholyte was done by an ion conduction membrane which allows the current to pass across the cell. The anolyte and catholyte pass the cell with approximately equal flow rate. The catholyte concentration was chosen to fit to the osmotic pressure of the anolyte. The solution coming from the starch oxidation process was used at ~20 °C and an electrical current was applied in the magnitude of around 0.5 A. The pH of the anolyte was kept alkaline by feeding catholyte to it. After 250 minutes, sufficient solid material in form of para-periodate was obtained.

The depleted electrolyte was then acidified in an electrolyzer by applying 0.5 A until the pH drops below 4. The precipitate is then added subsequently in small portions. The pH was kept acidic by cycling over the acidification unit to fully dissolve all solid material. The acidification temperature was ~20 °C.

This entire recycle loop, being key in this process, included various individual cycles like a(n) (so called): anolyte and catholyte synthesis loop, anolyte and catholyte acidification loop, oxidation-reduction potential lift, suspension loop and/or recycle loop. All of these individual cells together made up for a complete electrochemical recycle set-up enabling an operation as a more or less closed system using a little water (using the wash water) and releasing hydrogen gas which was used in a fuel cell to generate some of the electricity for the electrochemical recycling process again.

## Claims

1. A method for oxidizing a carbohydrate into a dialdehyde carbohydrate using periodic acid, and regenerating the periodic acid used in the carbohydrate oxidation, involving first oxidizing a carbohydrate using periodic acid, to obtain the corresponding dialdehyde carbohydrate and iodic acid, wherein the iodic acid thus generated is subjected to a two-step electrolytic process, wherein the iodic acid is first electrolytically regenerated into periodate under alkaline conditions, and the periodate thus formed is then electrolytically acidified to periodic acid, which periodic acid is returned to the carbohydrate oxidation.

2. The method according to claim 1, wherein the carbohydrate is cellulose or starch.

3. The method according to claim 1 or 2, wherein the iodic acid is first electrolytically regenerated into periodate using hydroxide, preferably sodium hydroxide.

4. The method according to any of the preceding claims, characterized being a closed loop method meaning that after start-up addition of the periodic acid and base, the method can be carried out continuously with an inward transfer of carbohydrate to the carbohydrate oxidation and electricity for the electrolytic cells in the regeneration cycle, and that periodic acid and preferably also the base is used essentially catalytically, and without the structural need for additions of chemicals such as base and periodic acid after initiation of the first oxidation step.

5. The method according to any one of the preceding claims, wherein the periodate regeneration from iodate and/or the periodate acidification are carried out in an electrolytic cell with a boron-doped diamond anode.

6. The method according to any one of the preceding claims, wherein at least a part of any H₂ generated in the periodate regeneration steps is transformed in a fuel cell to produce electricity which may be used in the electrolytic regeneration steps.

7. An installation for carrying out the method according to any one of the preceding claims, comprising a reactor unit A comprising an inlet for the carbohydrate feed 1 and an outlet for the dialdehyde carbohydrate-comprising stream, wherein the reactor unit A is conditioned for carbohydrate oxidation to form dialdehyde carbohydrate, wherein the dialdehyde carbohydrate-comprising stream is subjected to means B for separating iodic acid from the dialdehyde carbohydrate-comprising stream 2 and the iodic acid-enriched stream 3 is forwarded to the anode side of an electrolytic cell C with a BDD anode, wherein the pH of the anolyte of the electrolytic cell C is controlled to alkaline conditions, wherein the electrolytic cell C is conditioned to carry out the periodate regeneration from iodate, wherein the electrolytical cell C is provided with means for separating periodate that precipitates in the anolyte, and the separated periodate-stream 5 is forwarded to a second electrolytic cell D with a BDD anode, wherein the electrolytic cell D is conditioned to carry out the periodate acidification, and wherein periodic acid 6 thus formed is returned to reactor unit A.

8. The installation according to claim 7, wherein any residual organics introduced with the iodate fed to the periodate oxidation cell are oxidized at the BDD anode(s) in the periodate regeneration cycle.

## Patentansprüche

1. Verfahren zum Oxidieren eines Kohlenhydrats zu einem Dialdehydkohlenhydrat unter Verwendung von Periodsäure, und Regenerieren der bei der Kohlenhydratoxidation verwendeten Periodsäure, beinhaltend zuerst das Oxidieren eines Kohlenhydrats unter Verwendung von Periodsäure, um das entsprechende Dialdehydkohlenhydrat und Iodsäure zu erhalten, wobei die dadurch erzeugte Iodsäure einem zweistufigen elektrolytischen Prozess unterworfen wird, wobei die Iodsäure zuerst unter alkalischen Bedingungen elektrolytisch zu Periodat regeneriert wird, und das dadurch gebildete Periodat dann elektrolytisch zu Periodsäure angesäuert wird, wobei die Periodsäure zur Kohlenhydratoxidation zurückgeführt wird.

2. Verfahren nach Anspruch 1, wobei das Kohlenhydrat Cellulose oder Stärke ist.

3. Verfahren nach Anspruch 1 oder 2, wobei die Iodsäure zuerst elektrolytisch unter Verwendung von Hydroxid, bevorzugt Natriumhydroxid, zu Periodat regeneriert wird.

4. Verfahren nach einem der vorstehenden Ansprüche, gekennzeichnet als geschlossenes Kreislaufverfahren, das bedeutet, dass, nach Anfangszugabe der Periodsäure und Base, das Verfahren mit einer internen Übertragung von Kohlenhydrat zur Kohlenhydratoxidation und Elektrizität für die Elektrolysezellen im Regenerationszyklus kontinuierlich durchgeführt werden kann, und dass Periodsäure und bevorzugt auch die Base im Wesentlichen katalytisch verwendet werden, und ohne die strukturelle Notwendigkeit zur Zugabe von Chemikalien wie etwa Base und Periodsäure nach Initiierung des ersten Oxidationsschritts.

5. Verfahren nach einem der vorstehenden Ansprüche, wobei die Periodatregeneration aus Iodat und/oder die Periodatansäuerung in einer Elektrolysezelle mit einer Bor-dotierten Diamantanode durchgeführt werden.

6. Verfahren nach einem der vorstehenden Ansprüche, wobei mindestens ein Teil von jeglichem in den Periodatregenerationsschritten erzeugten H₂ in einer Brennstoffzelle umgewandelt wird, um Elektrizität zu erzeugen, welche in den elektrolytischen Regenerationsschritten verwendet werden kann.

7. Installation zum Durchführen des Verfahrens nach einem der vorstehenden Ansprüche, umfassend eine Reaktoreinheit A, die einen Einlass für die Kohlenhydratzufuhr 1 und einem Auslass für den Dialdehydkohlenhydrat-umfassenden Strom umfasst, wobei die Reaktoreinheit A auf die Kohlenhydratoxidation ausgelegt ist, um Dialdehydkohlenhydrat zu bilden, wobei der Dialdehydhkohlenhydrat-umfassende Strom Mitteln B zur Abtrennung von Iodsäure aus dem Dialdehydkohlenhydrat-umfassenden Strom 2 unterworfen wird und der Iodsäure angereicherte Strom 3 an die Anodenseite einer Elektrolysezelle C mit einer BDD-Anode weitergeleitet wird, wobei der pH des Anolytes der Elektrolysezelle C auf alkalische Bedingungen eingestellt ist, wobei die Elektrolysezelle C darauf ausgelegt ist, um die Periodatansäuerung aus Iodat durchzuführen, wobei die Elektrolysezelle C mit Mitteln zum Trennen von Periodat, das aus dem Anolyten ausfällt, bereitgestellt ist, und der getrennte Periodatstrom 5 einer zweiten Elektrolysezelle D mit einer BDD-Anode zugeführt wird, wobei die Elektrolysezelle D darauf ausgelegt ist, um die Periodatansäuerung durchzuführen, und wobei die dadurch gebildete Periodsäure 6 zur Reaktoreinheit A zurückgeführt wird.

8. Installation nach Anspruch 7, wobei jegliche organische Rückstände, die mit dem Iodat, das an die Periodatoxidationszelle zugeführt wurde, eingebracht wurden, an der/den BDD-Anode(n) im Periodatregenerationskreislauf oxidiert werden.

## Revendications

1. Procédé pour oxyder un glucide en un dialdéhyde glucide à l'aide d'acide périodique, et régénérer l'acide périodique utilisé dans l'oxydation du glucide, comprenant d'abord l'oxydation d'un glucide à l'aide d'acide périodique, afin d'obtenir les correspondants dialdéhyde glucide et acide iodique, où l'acide iodique ainsi généré est soumis à un processus électrolytique en deux étapes, où l'acide iodique est d'abord régénéré par électrolyse en periodate dans des conditions alcalines, et le periodate ainsi formé est ensuite acidifié par électrolyse en acide périodique, lequel acide périodique est renvoyé vers l'oxydation de glucides.

2. Procédé selon la revendication 1, où le glucide est de la cellulose ou de l'amidon.

3. Procédé selon la revendication 1 ou 2, où l'acide iodique est d'abord régénéré par électrolyse en periodate à l'aide d'hydroxyde, de préférence d'hydroxyde de sodium.

4. Procédé selon l'une quelconque des revendications précédentes, **caractérisé en ce qu'**il s'agit d'un procédé en boucle fermée, ce qui signifie qu'après un ajout initial d'acide périodique et de base, le procédé peut être effectué en continu avec un transfert vers l'intérieur de glucides vers l'oxydation de glucides et d'électricité pour les cellules électrolytiques dans le cycle de régénération, et que l'acide périodique et de préférence également la base sont utilisés essentiellement de manière catalytique, et sans le besoin structurel d'ajouter des produits chimiques tels que la base et l'acide périodique après le début de la première étape d'oxydation.

5. Procédé selon l'une quelconque des revendications précédentes, où la régénération du periodate à partir de l'iodate et/ou l'acidification du periodate sont effectuées dans une cellule électrolytique avec une anode en diamant dopé au bore.

6. Procédé selon l'une quelconque des revendications précédentes, où au moins une partie de tout H₂ généré lors des étapes de régénération du periodate est transformée dans une pile de combustible pour produire de l'électricité qui peut être utilisée dans les étapes de régénération électrolytique.

7. Installation pour effectuer le procédé selon l'une quelconque des revendications précédentes, comprenant une unité de réacteur A comprenant une entrée pour l'alimentation en glucides 1 et une sortie pour le flux comprenant du dialdéhyde glucide, où l'unité de réacteur A est conditionnée pour l'oxydation de glucides afin de former du dialdéhyde glucide, où le flux comprenant du dialdéhyde glucide est soumis à des moyens B pour séparer l'acide iodique du flux 2 comprenant du dialdéhyde glucide et le flux 3 enrichi en acide iodique est transféré vers le côté anode d'une cellule électrolytique C avec une anode BDD, où le pH de l'anolyte de la cellule électrolytique C est maintenu dans des conditions alcalines, où la cellule électrolytique C est conditionnée pour effectuer la régénération du périodate à partir de l'iodate, où la cellule électrolytique C est pourvue de moyens pour séparer le périodate qui précipite dans l'anolyte, et le flux 5 de périodate séparé est transféré vers une deuxième cellule électrolytique D avec une anode BDD, où la cellule électrolytique D est conditionnée pour effectuer l'acidification du periodate, et où l'acide periodique 6 ainsi formé est renvoyé vers l'unité de réacteur A.

8. Installation selon la revendication 7, où tout résidu organique introduit avec l'iodate alimentant la cellule d'oxydation de periodate est oxydé au niveau de la ou des anodes BDD dans le cycle de régénération du periodate.
